# EUROPÄISCHE PATENTSCHRIFT

(11) **EP 2 452 245 B1**
(45) Veröffentlichungstag und Bekanntmachung des Hinweises auf die Patenterteilung: **09.07.2014**
(21) Anmeldenummer: 10721779.6
(22) Anmeldetag: 19.05.2010
(51) Int. Cl.: G05D 16/20, F16K 31/06

(54) **ELEKTROMAGNETVENTIL MIT EINSTELLBAREM MAGNETISCHEN FLUSS**
SOLENOID VALVE WITH ADJUSTABLE MAGNETIC FLUX
VALVE ELECTROMAGNÉTIQUE AVEC UN FLUX MAGNÉTIQUE AJUSTABLE

(30) Priorität: 08.07.2009 DE 102009032367
(43) Veröffentlichungstag der Anmeldung: 16.05.2012
(73) Patentinhaber: Pierburg GmbH, 41460 Neuss (DE)
(72) Erfinder: BUSE, Werner, 41564 Kaarst (DE); FERNANDES, Alvito, 51377 Leverkusen (DE)
(74) Vertreter: Patentanwälte ter Smitten Eberlein Rütten Partnerschaftsgesellschaft
(86) Internationale Anmeldenummer: PCT/EP2010/056890
(87) Internationale Veröffentlichungsnummer: WO 2011/003661

(56) Entgegenhaltungen:
- WO-A1-2004/044932
- DE-A1- 4 023 826
- US-A- 4 463 332
- US-A- 4 954 799
- US-A- 5 110 087
- US-A- 5 758 626
- US-B1- 6 631 633

## Beschreibung

Die Erfindung betrifft einen Elektromagnetantrieb für ein Ventil mit einem Gehäuse mit mindestens einem elektromagnetischen Kreis, der aus einer auf einen Spulenträger gewickelten Spule, einem Anker, mindestens einem Kern und mindestens einer magnetisierbaren Rückschlusseinrichtung aufgebaut ist, wobei der Anker zwischen zwei Endlagen beweglich gelagert ist und zumindest indirekt auf ein Ventilverschlussglied einwirkt, wobei Mittel vorgesehen sind, die den Anker im nicht-bestromten Zustand fixieren, wobei eine Bestromung der Spule eine Bewegung des Ankers in die erste oder die zweite Endlage verursacht, wobei Mittel zum Justieren der Magnetkraft vorgesehen sind, wobei der Kern am zum Ventilschlussglied gerichteten Ende des Elektromagnetantriebs vorgesehen ist, derart, dass der Anker bei Bestromung vom Kern in die zweite Endlage gezogen wird.

Derartige Elektromagnetantriebe sind hinlänglich bekannt. Die DE 10 2007 002 153 B3 beschreibt beispielsweise einen Elektromagnetantrieb für ein Druckregelventil. Aufgrund von Bauteiltoleranzen, oder einer bestimmten Werkstoffauswahl kommt es zwangsläufig zu einer Streuung der Magnetkraft, die eine Justierung der Magnetkraft nach Montage des Elektromagnetantriebes notwendig macht. Die DE 10 2007 002 153 B3 zeigt eine mechanische Justierung, bei der durch eine Einstellschraube die Vorspannkraft einer Feder derart eingestellt wird, dass eine bestimmte zusätzliche Magnetkraft erbracht werden muss, um den Anker aus einer ersten Endlage in eine zweite Endlage zu bewegen. Ein Nachteil dieser Art der Justierung ist, das einmal eine konstante Vorspannkraft eingestellt wird, die in jedem Betriebszustand des Elektromagnetantriebes wirkt, unabhängig davon, wie hoch die jeweilige Magnetkraft ist. Des Weiteren wird für die Lösung gemäß der DE 10 2007 002 153 83 ein weiteres Bauteil nämlich die Feder benötigt.

Darüber hinaus ist es bei elektromagnetischen Antrieben für Ventile belspielseise aus der WO 20041044932 A1 bekannt, als Mittel zum Justieren einer Magnetkraft ein im Kern verstellbares Justiermittel vorzusehen. Eine derartige Ausführung ist bei einer Anordnung des Kerns an zum Ventilglied gerichteten Ende nur unter sehr hohem montagetechnischem Aufwand zu realisieren.

Es ist daher Aufgabe der Erfindung, einen Elektromagnetantrieb bereit zu stellen, der die vorgenannten Nachteile vermeidet um mit einer möglichst geringen Bauteilanzahl auf günstige Weise herstellbar ist.

Diese Aufgabe wird erfindungsgemäß dadurch gelöst, die Rückschlusseinrichtung ein axial zum Kern verlaufendes Rückschlussorgan aufweist, wobei die Mittel zum Justieren eine Justierschraube aufweisen, die den Verlauf der magnetischen Feldlinien beeinflusst und die in eine Justierbohrung des Rückschlussorgans in Richtung des Ankers einführbar ist, wobei das Rückschlussorgan im Bereich der Justierbohrung auf der zur Spule gerichteten Seite eine umlaufende Aussparung aufweist. Somit kann auf einfache Weise die Anzahl der Magnetfeldlinien im Bereich des Übergangs zum Anker erhöht werden und damit die Magnetkraft direkt beeinflusst werden, wobei die Aussparung eine Streuung der Magnetfeldlinien und damit eine Schwächung der Magnetkraft verhindert.

Um eine möglichst feine Justierung vornehmen zu können, kann die Aussparung eine Nut sein deren Eindringtiefe zumindest an der zum Anker gerichteten Seite im Wesentlichen linear ansteigt.

Zur Lagerung des Ankers kann das Rückschlussorgan eine Gleitlagerbuchse aufweisen. In einer vorteilhaften Ausführungsform ist die Justierschraube über ein Gewinde oder eine Rändelung in dem Rückorgan angeordnet.

Insbesondere bei einer schnellen Bewegung des Ankers, ist es Vorteilhaft, wenn das Rückschlussorgan und/oder die Justierschraube jeweils eine Druckausgleichsbohrung aufweisen.

Auch hat es sich als vorteilhaft erwiesen, das eine Membrane vorgesehen ist, die mit einer radial nach außen gerichteten Fläche im Gehäuse und mit einer radial nach innen gerichteten Fläche am Ventilverschlussglied angeordnet ist, derart, dass der Elektromagnetantrieb gegenüber dem Ventil abgedichtet ist. Je nach verwendetem Medium im anzusteuernden Ventil, kann eine Verschmutzung des Elektromagnetantriebes auf diese Art und Weise wirksam verhindert werden. In einer vorteilhaften Ausführungsform weist die Membrane eine Federkraft auf, die den Anker in eine Endlage fixiert. Auch kann es vorteilhaft sein, wenn das Rückschlussorgan eine bis zur ersten Endlage durchgehende Justierbohrung aufweist, in die eine Madenschraube als Justierschraube einführbar ist.

Eine Ausführungsform der Erfindung wird nachfolgend anhand der Zeichnungen näher beschrieben. Hierin zeigen:
Figur 1 eine schematische Schnittdarstellung eines erfindungsgemäßen Elektromagnetantriebes mit der Justierschraube in einer ersten Stellung, und
Figur 2 eine schematische Schnittdarstellung eines erfindungsgemäßen Elektromagnetantriebes mit der Justierschraube in einer zweiten Stellung.

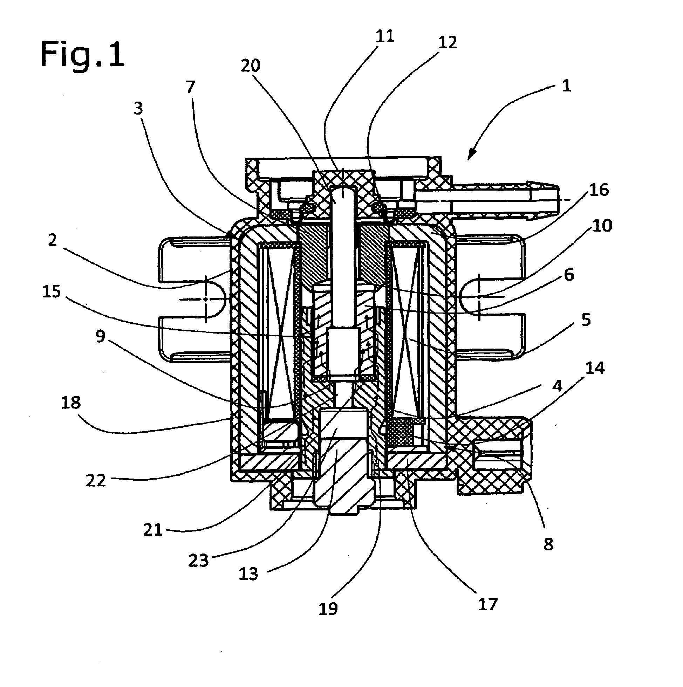

Figur 1 zeigt ein schematisch dargestelltes erfindungsgemäßes Elektromagnetventil 1, das im vorliegenden Ausführungsbeispiel auf ein Ventilverschlussglied 11 einwirkt. Das dazugehörige Ventil ist im vorliegenden Fall nicht näher dargestellt. Es sei jedoch darauf hingewiesen, dass die gezeigte Ausführungsform des Elektromagnetantriebs 1 besonders geeignet für ein Druckregelventil ist.

Im vorliegenden Ausführungsbeispiel weist der Elektromagnetantrieb 1 ein Gehäuse 2 mit einen elektromagnetischen Kreis 3 auf, wobei eine Spule 5 auf einen Spulenträger 4 gewickelt ist. Des Weiteren ist ein am zum Ventilschlussglied 11 gerichteten Ende des Elektromagnetantriebs 1 angeordneter Kern 7 vorgesehen, der in einer Rückschlusseinrichtung 8 befestigt ist.

Im vorliegenden Fall besteht die Rückschlusseinrichtung 8 im Wesentlichen aus drei Rückschlussblechen 16, 17, 18 und einem Rückschlussorgan 19. Das Rückschlussorgan 19 ist über nicht dargestellte Rasthaken im Spulenträger 4 angeordnet. Der Anker 6 ist zumindest an der vom Ventilverschlussglied 11 in Ringform ausgeführt und an der gegenüberliegenden Seite über einen Ventilstößel 20 mit dem Ventilverschlussglied 11 verbunden.

Im dargestellten Ausgangszustand ist der Anker 6 in einer ersten, unteren Endlage 9 fixiert. Diese Fixierung wird im vorliegenden Fall durch die Federkraft einer Membrane 12 erreicht, wobei die Membrane 12 mit einer radial nach außen gerichteten Fläche im Gehäuse 2 und mit einer radial nach innen gerichteten Fläche am Ventilverschlussglied 11 angeordnet ist. Es sollte jedoch deutlich sein, dass eine derartige Fixierung auch mittels geeigneter Federn erreicht werden kann.

Der In Axialrichtung bewegliche Anker 6 ist über eine Gleitlagerbuchse 15, im vorliegenden Ausführungsbeispiel eine DU-Buchse, im Rückschlussorgan 19 gelagert. Des Weiteren ist in der ersten Endlage 9 ein nicht-magnetisierbares Anschlagelement 21 vorgesehen, gegen das der Anker 6 in der ersten Endlage 9 anliegt.

Wird nun eine Bestromung des Elektromagnetantriebs 1 vorgenommen, werden die Magnetfeldlinien, den in Figur 1 dargestellten Verlauf nehmen und der Anker wird auf bekannte Weise vom Kern 7 in die zweite Endstellung 10 gezogen.

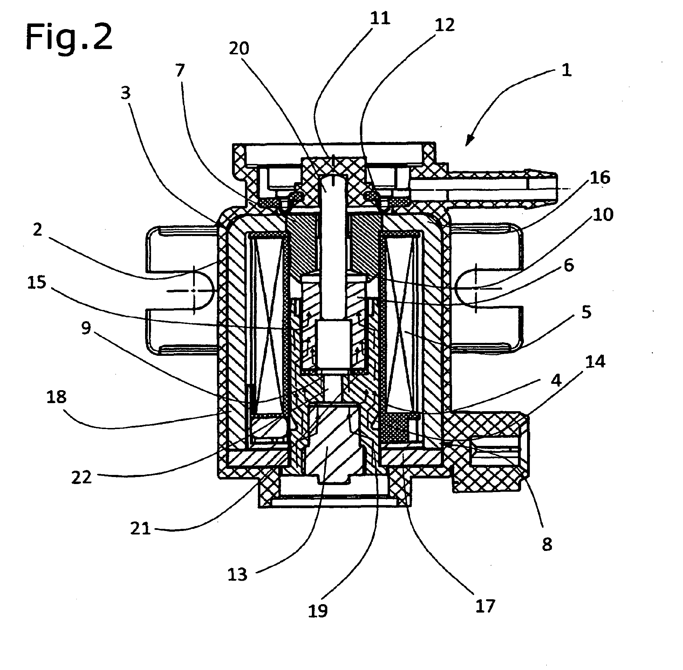

Stellt sich nun nach Montage heraus, dass die zu einem vorgegebenen Steuerstrom resultierende Magnetkraft sich nicht im gewünschten Toleranzbereich befindet, ist über eine Justierschraube 13 eine FeinJustierung des Elektromagnetantriebes möglich. Hierzu kann die Justierschraube 13, die über ein Gewinde oder auch eine Rändelung im Rückschlussorgan 19 angeordnet ist, in Richtung des Ankers 6 bewegt werden. Dadurch wird die Anzahl der im Rückschlussorgan 19 befindlichen magnetischen Feldlinien, wie es in Figur 2 dargestellt ist, deutlich erhöht, was eine vergrößerte Magnetkraft zur Folge hat. Um eine Streuung der Magnetfeldlinien im Bereich des Übergangs von dem Rückschlussorgan 19 zum Anker 6 zu verhindern, ist im Bereich der Justierbohrung 23 auf der zur Spule 5 gerichteten Seite des Rückschlussorgans 19 eine umlaufende Aussparung 14 vorgesehen.

Insbesondere bei einer schnellen oszillierenden Bewegung des Ankers 6, ist es Vorteilhaft, wenn das Rückschlussorgan, wie im vorliegenden Fall Druckausgleichsbohrung 21 aufweist. Natürlich kann auch noch die Justierschraube 13 eine entsprechende Bohrung aufweisen.

Nach Justierung durch die Justierschraube 13 kann der Elektromagnetantrieb 1 durch einen hier nicht weiter dargestellten Deckel im Bereich des Rückschlussorgans 19 verschlossen werden.

Um eine Verstellung der vorgenommenen Position der Justierschraube 13 im Rückschlussorgan zu verhindern, können beispielsweise Schweißpunkte im Bereich des Übergangs zwischen Justierschraube und Rückschlussorgan angebracht werden. Auch eine Fixierung mittels Stiften ist denkbar.

Es sollte deutlich sein, dass die Justierschraube 13 nicht zwingend mit einem Gewinde oder einer Rändelung versehen sein muss. Auch kann sie als Madenschraube ausgeführt sein, die in eine durchgehende Bohrung der Rückschlusseinrichtung 8 einführbar ist.

## Patentansprüche

1. Elektromagnetantrieb für ein Ventil mit einem Gehäuse (2) mit mindestens einem elektromagnetischen Kreis (3), der aus einer auf einen Spulenträger (4) gewickelten Spule (5), einem Anker (6), mindestens einem Kern (7) und mindestens einer magnetisierbaren Rückschlusseinrichtung (8) aufgebaut ist, wobei der Anker (6) zwischen zwei Endlagen (9, 10) beweglich gelagert ist und zumindest indirekt auf ein Ventilverschlussglied (11) einwirkt, wobei Mittel (12) vorgesehen sind, die den Anker (6) im nicht bestromten Zustand fixieren, wobei eine Bestromung der Spule (5) eine Bewegung des Ankers (6) in die erste (9) oder die zweite Endlage (10) verursacht, wobei Mittel (13) zum Justieren der Magnetkraft vorgesehen sind, wobei der Kern (7) am zum Ventilverschlussglied (11) gerichteten Ende des Elektromagnetantriebs (1) vorgesehen ist, derart, dass der Anker bei Bestromung vom Kern (7) in die zweite Endlage gezogen wird,
**dadurch gekennzeichnet, dass**
die Rückschlusseinrichtung (8) ein axial zum Kern (7) verlaufendes Rückschlussorgan (19) aufweist, wobei die Mittel (13) zum Justieren eine Justierschraube aufweisen, die den Verlauf der magnetischen Feldlinien beeinflusst und die in eine Justierbohrung (23) des Rückschlussorgans (19) In Richtung des Ankers (6) einführbar ist, wobei das Rückschlussorgan (19) im Bereich der Justierbohrung (23) auf der zur Spule (5) gerichteten Seite eine umlaufende Aussparung (14) aufweist.

2. Elektromagnetantrieb nach Anspruch 1, **dadurch gekennzeichnet, dass** die Aussparung (14) eine Nut ist, deren Eindringtiefe zumindest an der zum Anker (6) gerichteten Seite linear ansteigt.

3. Elektromagnetantrieb nach Anspruch 1 - 2, **dadurch gekennzeichnet, dass** das Rückschlussorgan (19) eine Gleitlagerbuchse (15) zum Lagern des Ankers (6) aufweist.

4. Elektromagnetantrieb nach Anspruch 2 oder 3, **dadurch gekennzeichnet, dass** die Justierschraube (13) über ein Gewinde oder eine Rändelung im Rückschlussorgan (19) in der Justierbohrung (23) angeordnet ist.

5. Elektromagnetantrieb nach einem der vorhergehenden Ansprüche, **dadurch gekennzeichnet, dass** das Rückschlussorgan (19) und/oder die Justierschraube (13) jeweils eine Druckausgleichsbohrung aufweisen.

6. Elektromagnetantrieb nach einem der vorhergehenden Ansprüche, **dadurch gekennzeichnet, dass** eine Membrane (12) vorgesehen ist, die mit einer radial nach aussen gerichteten Fläche im Gehäuse (2) und mit einer radial nach innen gerichteten Fläche am Ventilverschlussglied (11) angeordnet ist, derart dass der Elektromagnetantrieb (1) gegenüber dem Ventil abgedichtet ist.

7. Elektromagnetantrieb nach Anspruch 6, **dadurch gekennzeichnet, dass** die Membrane (12) eine Federkraft aufweist, die den Anker (6) in einer ersten Endlage (9) fixiert, wobei die Membrane (12) mit einer radial nach außen gerichteten Fläche im Gehäuse (2) und mit einer radial nach innen gerichteten Fläche am Ventilverschlussglied (11) angeordnet ist.

8. Elektromagnetantrieb nach einem der vorhergehenden Ansprüche, **dadurch gekennzeichnet, dass** das Rückschlussorgan (19) eine bis zur ersten Endlage (9) durchgehende Justierbohrung (23) aufweist, in die eine Madenschraube (13) als Justierschraube einführbar ist.

## Claims

1. An electromagnetic drive for a valve, comprising a housing (2) having at least one electromagnetic circuit (3) which is composed of a coil (5) wound onto a coil carrier (4), an armature (6), at least one core (7) and at least one magnetizable reflux device (8), wherein the armature (6) is movably supported between two end positions (9, 10) and at least indirectly acts on a valve closing member (11), wherein means (12) are provided to fix the armature in the currentless state, wherein supplying the coil (5) with a current causes a movement of the armature (6) into the first (9) or the second end position (10), means (13) being provided for adjusting the magnetic force, and the core (7) being provided at the end of the electromagnetic drive (1) which is directed toward the valve closing member (11), **characterized in that**
the reflux device (8) comprises a reflux member (19) extending axially with respect to the core (7), said adjusting means (13) comprising an adjusting screw which influences the course of the magnetic field lines and can be introduced into an adjusting bore (23) of the reflux member (19) in the direction of the armature (6), wherein the reflux member (19) has a circumferential recess (14) in the area of the adjusting bore (23) on the side facing the coil (5).

2. The electromagnetic drive according to claim 1, **characterized in that** the recess (14) is a groove whose penetration depth increases in a linear manner at least on the side facing toward the armature (6).

3. The electromagnetic drive according to any one of claims 1 - 2, **characterized in that** the reflux member (19) comprises a slide bearing bushing (15) for supporting the armature (6).

4. The electromagnetic drive according to claim 2 or 3, **characterized in that** the adjustment screw (13) is arranged in the adjusting bore (23) via a thread or a knurl in the reflux member (19).

5. The electromagnetic drive according to any one of the preceding claims, **characterized in that** the reflux member (19) and/or the adjustment screw (13) comprise a respective pressure compensation bore.

6. The electromagnetic drive according to any one of the preceding claims, **characterized in that** a membrane (12) is provided which, by a radially outward face, is arranged in the housing (2) and, by a radially inward face, is arranged on the valve closing member (11), in such a manner that the electromagnetic drive (1) is sealed against the valve.

7. The electromagnetic drive according to claim 6, **characterized in that** the membrane (12) has a resilient force fixing the armature (6) in a first end position (9), the membrane (12) being arranged, by a radially outward face, in the housing (2) and, by a radially inward face, on the valve closing member (11).

8. The electromagnetic drive according to any one of the preceding claims, **characterized in that** the reflux member (19) comprises an adjustment bore (23) extending to the first end position (9), said adjustment bore being adapted for insertion thereinto of a headless screw (13) as an adjustment screw.

## Revendications

1. Mécanisme électromagnétique pour une vanne comprenant un boitier (2) avec au moins un circuit électromagnétique (3) formé par une bobine (5) enroulée sur un support de bobine (4), une armature (6), au moins un noyau (7) et au moins un moyen de reflux (8) magnétisable, ladite armature (6) étant supportée mobile entre deux positions d'extrémité (9, 10) et agissant au moins indirectement sur un élément obturateur de vanne (11), des moyens (12) étant prévus qui fixent ladite armature (6) dans l'état non alimenté en courant, l'alimentation de la bobine (5) en courant provoquant le déplacement de ladite armature (6) dans la première (9) ou la deuxième position d'extrémité (10), des moyens (13) étant prévus pour ajuster la force magnétique, ledit noyau (7) étant disposé à l'extrémité du mécanisme électromagnétique (1) orientée vers l'élément obturateur de vanne (11) de sorte que ladite armature est tirée dans la deuxième position d'extrémité par ledit noyau (7) lors de l'alimentation en courant,
**caractérisé en ce que**
ledit moyen de reflux (8) comprend un élément de reflux (19) s'étendant axialement par rapport au noyau (7), lesdits moyens d'ajustage (13) comprenant une vis d'ajustage qui influence le tracé des lignes de champ magnétique et qui peut être insérée, dans la direction de ladite armature (6), dans une alésage d'ajustage (23) prévue dans ledit élément de reflux (19), ledit élément de reflux (19) présentant, dans la région de l'alésage d'ajustage (23), une encoche (14) circonférentielle dans le côté dirigé vers la bobine (5).

2. Mécanisme électromagnétique selon la revendication 1, **caractérisé en ce que** ladite encoche (14) est une rainure dont la profondeur de pénétration augmente linéairement au moins au côté dirigé vers ladite armature (6).

3. Mécanisme électromagnétique selon les revendications 1 - 2, **caractérisé en ce que** l'élément de reflux (19) comprend un coussinet lisse (15) pour supporter ladite armature (6).

4. Mécanisme électromagnétique selon les revendications 2 ou 3, **caractérisé en ce que** la vis d'ajustage (13) est disposée dans l'alésage d'ajustage (23) par un filetage ou moletage dudit élément de reflux (19).

5. Mécanisme électromagnétique selon l'une quelconque des revendications précédentes, **caractérisé en ce que** ledit élément de reflux (19) et/ou ladite vis d'ajustage (13) respectivement comprennent un alésage de compensation de pression.

6. Mécanisme électromagnétique selon l'une quelconque des revendications précédentes, **caractérisé en ce qu'**une membrane (12) est prévue qui, par une face dirigée radialement vers l'extérieur, est disposée dans ledit boitier (2) et qui, par une face dirigée radialement vers l'intérieur, est disposée audit élément obturateur de vanne (11) de sorte que ledit mécanisme électromagnétique (1) est étanche par rapport à la vanne.

7. Mécanisme électromagnétique selon la revendication 6, **caractérisé en ce que** ladite membrane (12) a une résilience fixant ladite armature (6) dans une première position d'extrémité (9), ladite membrane (12) étant disposée, par une face dirigée radialement vers l'extérieur, dans ledit boitier (2) et étant disposée, par une face dirigée radialement vers l'intérieur, audit élément obturateur de vanne (11).

8. Mécanisme électromagnétique selon l'une quelconque des revendications précédentes, **caractérisé en ce que** ledit élément de reflux (19) présente un alésage d'ajustage (23) s'étendant de manière continue jusqu'à la première position d'extrémité (9), une vis sans tête (13) pouvant être insérée dans l'alésage pour servir comme vis d'ajustage.
